# EUROPEAN PATENT APPLICATION

(11) **EP 4 821 350 A1**
(43) Date of publication of application: **14.10.2026**
(21) Application number: 26163400.0
(22) Date of filing: 09.03.2026
(51) Int. Cl.: A01K 61/77, A01K 61/54

(54) **METHOD FOR PRODUCING BODIES MOUNTABLE IN AN UNDERWATER STRUCTURE**

(30) Priority: 19.03.2025 NL 2040003
(71) Applicant: Advanced Tower Systems B.V., 7521 PT Enschede (NL)
(72) Inventor: Schouten, Jorrit, 7512 DJ Enschede (NL); Roody, Batool Soleimani, 7522 DD Enschede (NL); Raspoort, Anne Jeske, 3039 ZE Rotterdam (NL); Van Faassen, Menno Paul, 7523 VV Enschede (NL)
(74) Representative: 't Jong, Bastiaan Jacob

(57) **Abstract**

The invention relates to a method for producing bodies mountable in an underwater structure, which bodies comprise a root portion for mounting in the underwater structure and a crown portion on which sessile animals, in particular pediveliger larvae are settled, which method comprises the steps of:
- providing a number of bodies comprising a root portion and a crown portion;
- submerging the bodies in a basin of water loaded with sessile animals, in particular pediveliger larvae, such that a crown portion of each body is exposed to the sessile animals, while a root portion of each body is shielded from the sessile animals;
- after a predefined settling period removing the bodies from the basin.

## Description

The invention relates to a method for producing bodies mountable in an underwater structure, such as an artificial structure, which bodies comprise a root portion for mounting in the structure and a crown portion on which sessile animals, such as pediveliger larvae are settled.

Offshore wind farms are an essential part of the transition to renewable energy, providing a sustainable source of electricity while reducing carbon emissions. However, their impact on marine ecosystems has been a topic of discussion. One innovative solution to enhance biodiversity and marine life around offshore wind farms is the creation of artificial structures.

Artificial structures, constructed using purpose-built structures or repurposed materials, provide a habitat for marine species, promoting biodiversity and restoring degraded ecosystems. In offshore windmill parks, they offer numerous benefits, such as enhancing fish populations, supporting coral and mollusk growth, and improving overall marine health. Additionally, they contribute to stabilizing the seabed and reducing erosion caused by strong currents.

One particularly valuable aspect of artificial structures is their ability to support filter-feeding organisms such as oysters, mussels, and barnacles. These species attach to the structures and play a crucial role in improving water quality by filtering out pollutants, excess nutrients, and sediment.

It is known to expedite the growth of filter-feeding organisms by exposing artificial elements to sessile animals, such as pediveliger larvae in a basin.

Sessile animals are animals lacking a means of self-locomotion. Sessile animals for which natural motility is absent are normally immobile. This is distinct from the botanical concept of sessility, which refers to an organism or biological structure attached directly by its base without a stalk.

Pediveliger larvae are a stage in the life cycle of sessile bivalves, such as in particular clams, oysters, cockles, and mussels. In this stage, the larvae are free-floating in water and develop a foot, with which the larvae can attach to a substrate, such as an artificial element. As soon as the pediveliger larvae attach to the substrate, they fully develop in the adult form, such as clams, oysters, cockles, and mussels.

According to the prior art, an element is submerged in a basin with free floating pediveliger larvae and left there for a predefined time, such that the larvae can settle on the surface of the element.

A disadvantage of this prior art method is that large basins are required with a large number of larvae. Furthermore, the larvae will settle on any surface part of the structure and thus also on parts, where the larvae are not desired. So, the effectiveness of this prior art method is not very high.

In addition, this prior art method is also not suitable for structures, which are already in place, such as quays or coastal protection.

It is an object of the invention to reduce or even remove the above-mentioned disadvantages.

This object is achieved with a method according to the preamble, which method comprises the steps of:
- providing a number of bodies comprising a root portion and a crown portion;
- submerging the bodies in a basin of water loaded with sessile animals, such as pediveliger larvae, such that a crown portion of each body is exposed to the sessile animals, while a root portion of each body is shielded from the sessile animals;
- after a predefined settling period removing the bodies from the basin.

With the invention only the crown portion of a body is exposed to the water with the sessile animals, such as pediveliger larvae, such that these sessile animals will only settle on the desired surface portion of the bodies. Then the bodies are easily transferred to a structure where the bodies can be mounted with their respective root portion into an opening in the structure.

So, with the invention, not the whole structure needs to be submerged into a basin, but only the separate bodies. Because the root portion is shielded from the sessile animals, only the desired surface is exposed to the sessile animals and an optimal number of settled larvae is obtained.

The root portion could be shielded by a layer of sand, in which the bodies are inserted with their root portion.

In a preferred embodiment of the method according to the invention the bodies are provided by the steps of:
- providing a mould having a number of cavities each corresponding to at least the root portion of a body;
- filling the cavities of the mould with a cementitious material, such as concrete;
- after curing of the cementitious material, submerging the bodies in the basin, wherein the root portion of each body is shielded by the mould.

Although the bodies could be made from a suitable plastic material, for example by injection moulding, moulding the bodies from a cementious material ensures an optimal surface texture for the sessile animals to settle on.

In a further preferred embodiment of the method according to the invention the mould is a tray having a top surface from which tapering cavities, such as cone shaped, depend.

Such a tray is easily filled with the cementitious material and the bodies can easily be removed due to the tapering shaped after the cementitious material is cured. The tapering shape of the bodies also allow for an easy and firm fit in a hole in a structure, while the dimensions of the hole do not need to correspond exactly with the dimensions of the tapering shape.

In a further preferred embodiment of the method according to the invention the mould has a bottom mould portion and a top mould portion, wherein the cavities for the root portions are provided in the bottom mould portion and wherein cavities for the crown portions of the bodies are provided in the top mould portion, wherein the method further comprises the step of:
- after curing of the cementitious material removing the upper mould before submerging the mould in the basin of water.

With a mould having a bottom mould portion and a top mould portion it is possible to shape the crown portion of a body other than only a flat horizontal surface. The crown portions of the bodies could for example provide protrusions on the main surface of a structure in which the bodies are mounted with the root portion. An underwater structure with a rougher surface is obtained in this way, which can contribute to the growth of underwater life.

In another embodiment of the method according to the invention the mould is of a silicone rubber material or flexible plastic material, such as polyethylene, polypropylene, or polyvinyl chloride.

These materials are sufficiently flexible for the cured cementitious material bodies to be removed. Furthermore, the pediveliger larvae will not settle on the smooth surface of a silicone rubber material or flexible plastic material. This will concentrate the settling of larvae on the crown portion of the bodies.

Yet another embodiment of the method according to the invention further comprises the steps of:
- providing a number of holes in a surface of an underwater structure;
- after removing the bodies from the basin and from the mould, placing each of the bodies with the root portion in a hole provided in the surface of the underwater structure.

Preferably, the bodies are mounted into the holes in the surface of the underwater structure without any adhesive. This prevents any pollution of the underwater world in which the structure is placed.

The invention also relates to a body mountable in an underwater structure, which body comprises:
- a root portion for mounting in the structure and;
- a crown portion on which sessile animals, in particular pediveliger larvae are settled.

Preferably, the body is of a cementitious material.

Further preferred is that the main dimensions of such a body do not exceed 20 centimeters. The advantage thereof is that the bodies can easily be handled and can be easily submerged in a basin.

In yet another embodiment of the body according to the invention the root portion is cylindrical or tapering.

In still another embodiment of the body according to the invention the crown portion is flat or semi-spherical.

These and other features of the invention will be elucidated in conjunction with the accompanying drawings.
Figures 1A - 1D show the steps of an embodiment of the method according to the invention.
Figure 2A shows a cross-sectional view of a second embodiment of a mould for the method according to the invention.
Figure 2B shows a perspective view of a body made with the mould of figure 2A.
Figure 3A shows an underwater structure.
Figure 3B shows a cross-sectional detail of a body of the invention mounted in the underwater structure of figure 3A.

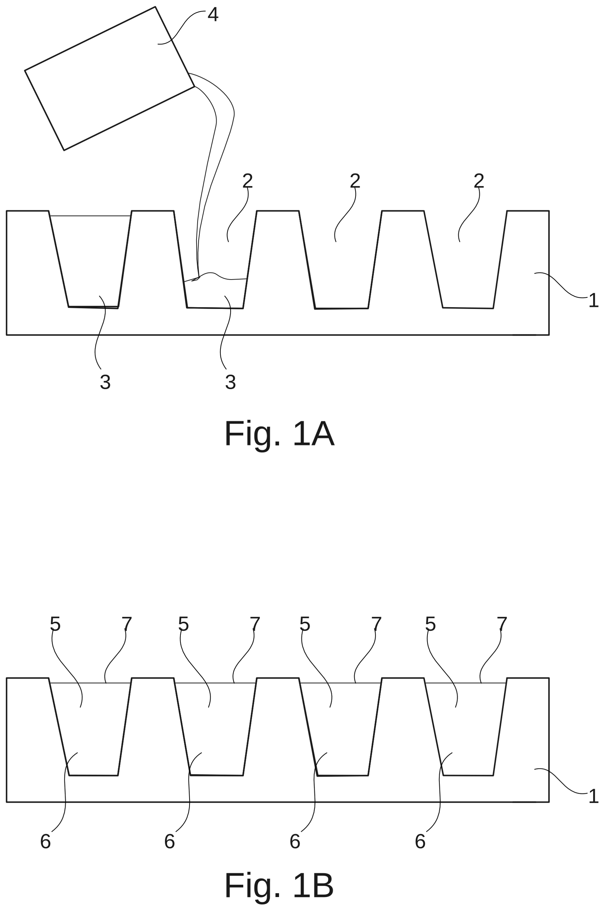

In figure 1A a mould 1 is provided. This mould 1 has a number of tapering cavities 2. The cavities 2 are filled with a cementitious material 3 out of a supply container 4.

In figure 1B the cementitious material 3 is allowed to cure into bodies 5 with a tapering root portion 6 and a flat crown portion 7.

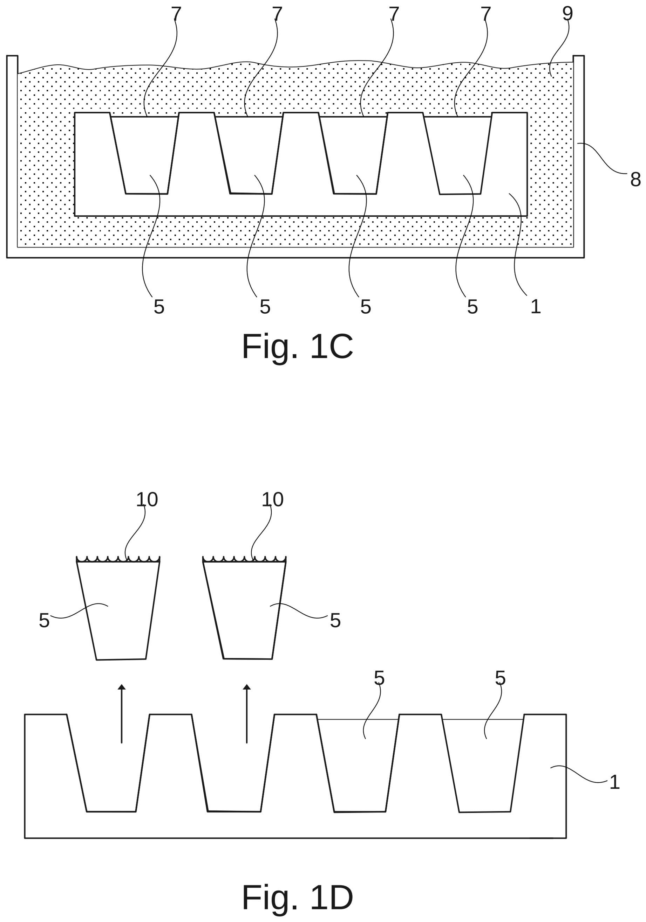

In figure 1C the mould 1 with the bodies 5 is submerged into a basin 8 filled with water 9 loaded with pediveliger larvae. As the mould 1 is still present around the root portion of the bodies 5, only the flat crown portion 7 is exposed to the free floating pediveliger larvae.

After a predefined settling period, the mould 1 with the bodies 5 is removed from the basin 8 and the bodies 5 are removed from the mould 1 (see figure 1D).

The crown portion 7 of the bodies 5 is now covered with a layer 10 of pediveliger larvae, which can grow into bivalvia, such as in particular clams, oysters, cockles, and mussels.

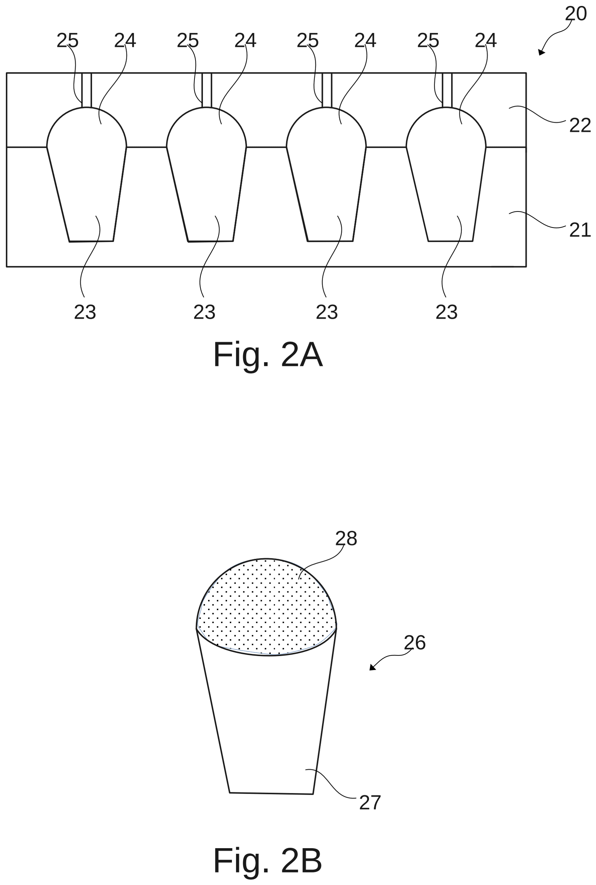

Figure 2A shows an embodiment 20 of a mould which can be used in the method according to the invention. The mould 20 has a lower mould portion 21 and a top mould portion 22. The lower mould portion 21 is provided with cavities 23 for forming the root portion of a body, while the top mould portion 22 is provided with dome-shaped cavities 24 for shaping the crown portion of a body.

When the lower mould portion 21 and top mould portion 22 are placed on top of each other, the cavities 23, 24 can be filled with cementitious material through the channels 25.

After curing of the cementitious material, the top mould 22 is removed and the lower mould 21 is submerged into a basin, similar as shown in figures 1A - 1D. After a predefined settling time, the lower mould 21 is removed from the basin and the bodies 26 are removed from the mould (see figure 2B). Each body 26 has a tapering root portion 27 free from any larvae, and a dome shaped crown portion 28 covered by a layer of larvae.

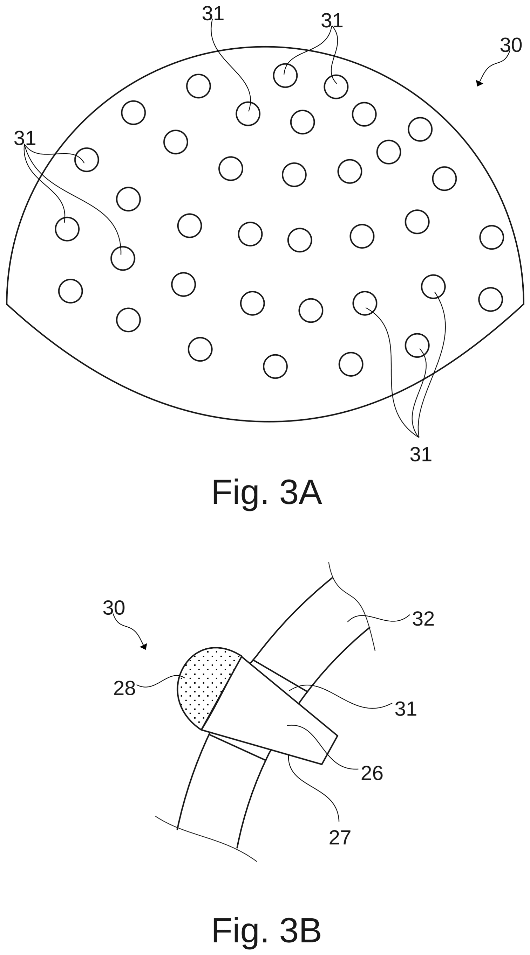

Figure 3A shows a perspective view of an embodiment of an underwater structure 30. This structure 30 is semi dome shaped and is provided with a plurality of holes 31.

Figure 3B shows a cross-sectional view of the structure 30. The holes 31 extend through the wall 32 of the structure 30. A body 26 is mounted with the root portion 27 in a hole 31 of the structure 30, while the crown portion 28 with the layer of larvae is exposed to the outside of the underwater structure 30.

## Claims

**1.** Method for producing bodies mountable in an underwater structure, which bodies comprise a root portion for mounting in the underwater structure and a crown portion on which sessile animals are settled, which method comprises the steps of:
- providing a number of bodies comprising a root portion and a crown portion;
- submerging the bodies in a basin of water loaded with sessile animals, particularly pediveliger larvae, such that a crown portion of each body is exposed to the sessile animals, while a root portion of each body is shielded from the sessile animals;
- after a predefined settling period removing the bodies from the basin.

**2.** Method according to claim 1, wherein the bodies are provided by the steps of:
- providing a mould having a number of cavities each corresponding to at least the root portion of a body;
- filling the cavities of the mould with a cementitious material, such as concrete;
- after curing of the cementitious material, submerging the bodies in the basin, wherein the root portion of each body is shielded by the mould.

**3.** Method according to claim 2, wherein the mould is a tray having a top surface from which tapering cavities, such as cone shaped, depend.

**4.** Method according to claim 2 or 3, wherein the mould has a bottom mould portion and a top mould portion, wherein the cavities for the root portions are provided in the bottom mould portion and wherein cavities for the crown portions of the bodies are provided in the top mould portion, wherein the method further comprises the step of:
- after curing of the cementitious material removing the upper mould before submerging the mould in the basin of water.

**5.** Method according to any of the preceding claims 2 - 4, wherein the mould is of a silicone rubber material or flexible plastic material, such as polyethylene, polypropylene, or polyvinyl chloride.

**6.** Method according to any of the preceding claims, wherein the method further comprises the steps of:
- providing a number of holes in a surface of an underwater structure;
- after removing the bodies from the basin, placing each of the bodies with the root portion in a hole provided in the surface of the underwater structure.

**6.** Body mountable in an underwater structure, which body comprises:
- a root portion for mounting in the structure and;
- a crown portion on which sessile animals, in particular pediveliger larvae are settled;

**7.** Body according to claim 6, wherein the body is of a cementitious material.

**8.** Body according to claim 6 or 7, wherein the root portion is cylindrical or tapering.

**9.** Body according to any of the claims 6 - 8, wherein the crown portion is flat or semi-spherical.
